**Europäisches Patentamt**

(19) **European Patent Office**

**Office européen des brevets**

(11) Veröffentlichungsnummer: **0 025 541**
**B1**

(12) # EUROPÄISCHE PATENTSCHRIFT

(45) Veröffentlichungstag der Patentschrift:
16.03.83

(51) Int. Cl.³: **B 29 C 5/04,** B 29 D 27/02,
B 29 H 17/00

(21) Anmeldenummer: 80105191.3

(22) Anmeldetag: 01.09.80

(54) **Verfahren und Vorrichtung zur Herstellung reifenförmiger Teile aus Polyurethanmehrkomponentenreaktionswerkstoffen.**

(30) Priorität: 12.09.79 DE 2936788

(43) Veröffentlichungstag der Anmeldung:
25.03.81 Patentblatt 81/12

(45) Bekanntmachung des Hinweises auf die Patenterteilung:
16.03.83 Patentblatt 83/11

(84) Benannte Vertragsstaaten:
DE FR GB IT

(56) Entgegenhaltungen:
EP-A-0 017 041
DE-A-1 753 821
FR-A-1 470 691

(73) Patentinhaber: BAYER AG, Zentralbereich Patente,
Marken und Lizenzen, D-5090 Leverkusen 1, Bayerwerk
(DE)

(72) Erfinder: **Boden, Heinrich, Sperberweg 14,
D-5090 Leverkusen 3 (DE)**
Erfinder: **Just, Gerhard, Finkenweg 2,
D-5653 Leichlingen 1 (DE)**
Erfinder: **Rentz, Berhard, Halenseestrasse 5,
D-5090 Leverkusen 1 (DE)**

ACTORUM AG

Verfahren und Vorrichtung zur Herstellung reifenförmiger Teile aus Polyurethanmehrkomponentenreaktionswerkstoffen

Die Erfindung betrifft ein Verfahren zur Herstellung rotationssymmetrischer und bezüglich einer zur Rotationsachse senkrechten Mittelebene symmetrischer, hohler, zur Rotationsachse hin offener reifenartiger Teile nach dem Reaktionsgiessverfahren aus Polyurethanmehrkomponentenreaktionswerkstoffen, wobei eine Schleuderform und zur Erzeugung des Hohlraums eine Kernform verwendet werden, und das Reaktionsgemisch von der Rotationsachse her über Angusskanäle dem Formhohlraum zugeführt wird, sowie Vorrichtungen zur Durchführung des Verfahrens. Insbesondere lassen sich damit Luftreifen herstellen, die aus unterschiedlichen Polyurethanelastomeren aufgebaut sind, beispielsweise mit einer weichen Laufflächenmischung, die auch armiert sein kann, einer gegebenenfalls ebenfalls armierten steifen Karkassenmischung und einer weichen Wulstmischung.

Es sind Fahrzeugreifen aus Polyurethanreaktionswerkstoffen bekannt, die aus unterschiedlichen Reaktionssystemen bestehen. Ein separat hergestellter Karkassenkörper wird beispielsweise in einem anderen Formwerkzeug mit einer Lauffläche umgossen. Da hier die Haftung unter dynamischer Beanspruchung der Lauffläche auf der Karkassenoberfläche unzureichend ist, hat man bei einem anderen Verfahren versucht, zunächst die Laufflächenmischung einzubringen und nach deren Verfestigung die Karkassenmischung einseitig einzufüllen. Da aber die Rückseite der Lauffläche beim Schleudervorgang zwangsläufig zylindrisch ausgebildet wird, ist der seitliche Übergang der meist ballig ausgeführten Lauffläche in dem Karkassenbereich nur bei extrem grosser Dicke im Reifenzenith zu erreichen. Bei diesem Verfahren kann auch nur mit niedrig aktivierten Karkassenwerkstoffen gearbeitet werden, da die flüssige Karkassenmischung von der Angiessstelle an einem Wulst an der Laufflächenrückseite vorbei bis zu dem zweiten Wulst hin verdrängt werden muss, bevor ein Viskositätsanstieg eintreten darf. Dieses Herstellungsverfahren wird noch problematischer, wenn Verstärkungseinlagen den Querschnitt zwischen der Rückseite der schon gegossenen Lauffläche und dem Formkern im Zenithbereich reduzieren. Für eine rationelle Serienfertigung nachteilig ist neben der Wartezeit für die Verfestigung der Laufflächenmischung auch das damit verbundene Schrumpfen der Lauffläche von der Formwerkzeugoberfläche, weil zwischen abgeschrumpfter Lauffläche und Formwerkzeugoberfläche beim Giessen der Karkasse Reaktionsgemisch in den Spalt eindringen kann.

Man hat versucht, für das Eingiessen der zweiten Karkassenreaktionsmischung auf die noch flüssige Laufflächenmischung zwei zusätzliche Mischköpfe an jedem Wulst einzusetzen. Eine solche Vorrichtung ist jedoch sehr sperrig und aufgrund der Baugrösse der Mischköpfe für die PKW-Reifenproduktion kaum zu realisieren. Die Entlüftung durch die Angiessschlitze an den beiden Wülsten ist sehr erschwert und nur bei sehr langsamer Einströmgeschwindigkeit und damit teilweise offenen Angiesskanälen möglich. Hochaktivierte Reaktionswerkstoffe lassen sich so nicht verarbeiten. Aufgrund der doppelten Anzahl von Dosieraggregaten, Mischköpfen, Rohr- und Schlauchleitungen, Steuerungen und Manipulatoren ist die Produktions- und Arbeitssicherheit beeinträchtigt.

Die FR-A Nr. 1470691 und die DE-A Nr. 1753821 vermitteln die Lehre, das Material gleichzeitig auf beiden Seiten der Mittelebene in den Formhohlraum einzufüllen, während die nach Art. 54 (3) zu berücksichtigende EP-A Nr. 0017041 die ausschliesslich auf einer Seite erfolgende Zuführung zeigt.

Es wurde nun gefunden, dass man insbesondere Fahrzeugreifen aus mehreren verschiedenen symmetrisch aufeinander aufgebauten Schichten aus Polyurethanmehrkomponentenreaktionswerkstoffen in kurzen Zykluszeiten herstellen kann, wenn man insbesondere die Karkasse und den Reifenwulst nach dem erfindungsgemässen Verfahren herstellt. Gegenstand der Erfindung ist ein Verfahren, bei dem das Reaktionsgemisch in gleicher Menge und gleicher Art wechselfreitig jeweils nur auf bezüglich der Mittelebene einer Seite dem Formholraum derart zugeführt wird, dass bezüglich der Mittelebene und der Rotationsachse ein symmetrischer Aufbau des Teiles erfolgt. Insbesondere kann sich bei diesem Verfahren die Zusammensetzung des Reaktionsgemisches zeitlich ändern. Gegenstand der Erfindung ist auch eine Vorrichtung zur Durchführung des Verfahrens, bestehend aus einer Schleudergiessform mit einer Kernform für das reifenartige Gebilde, ein die Mischvorrichtung beinhaltendes Giesswerkzeug und Angiessvorrichtungen, die dadurch gekennzeichnet ist, dass das Giesswerkzeug in der Reifenachse axial verschiebbar und so ausgebildet ist, dass das Reaktionsgemisch nur jeweils in eine Seite des bezüglich der Mittelebene symmetrischen Formenhohlraums gelangen kann, und dass Bewegung des Giesswerkzeugs sowie die Dauer des Giessens mit der Umdrehungszahl der Form so koordiniert sind, dass ein bezüglich der Mittelebene und auch bezüglich der Rotationsachse weitgehend gleichmässiger Aufbau erfolgt. Eine andere vorteilhafte Vorrichtung zur Durchführung des Verfahrens ist dadurch gekennzeichnet, dass das die Mischvorrichtung beinhaltende Giesswerkzeug fest in der Mittelebene des Formwerkzeugs liegt und an der Kernform zur Rotationsachse hin ein Leitsystem angebracht ist, das alternierend nur einen Ablauf des Reaktionsgemisches in jeweils eine Formhälfte zulässt.

Von besonderem Vorteil ist, dass sich nach diesem Verfahren mit diesen Vorrichtungen Fahrzeugreifen aus mehreren verschiedenen, symmetrisch aufgebauten Schichten aus Mehrkomponentenreaktionswerkstoffen, insbesondere aus solchen, die Polyurethane bilden, in kurzen Zykluszeiten herstellen lassen. Insbesondere wird durch die Armierungseinlagen der Herstellungsprozess nicht behindert. Zur Herstellung der Lauffläche wäre es im allgemeinen nicht erforderlich, das Reaktionsgemisch von beiden Seiten zeitlich abwechselnd in die Rotationsform einzubringen; die Lauffläche könnte auch nach anderen bekannten Arten hergestellt werden. Jedoch ist es wegen der Umschaltmöglichkeit des Mischkopfes möglich und sinnvoll, den ganzen Reifen einschliesslich der Wulstbereiche nach dem erfindungsgemässen Verfahren herzustellen. Sowohl bezüglich der Reifenachse als auch bezüglich der Mittelebene des Reifens wird ein sehr symmetrischer Aufbau erreicht. Reifenform und Reifengrösse können in weitem Bereich variieren. Die jeweils nicht benutzten Angiessöffnungen dienen als Entlüftungskanäle. Es können relativ hochaktivierte Reaktionsgemische verwendet werden. Besonders vorteilhaft ist auch der genau einstellbare Übergang von der weichen Lauffläche über eine mittelsteife Zwischenschicht zu einer steifen Karkasse. Zum Abschluss kann wieder auf eine weiche Mischung, die den Dichtungsbereich des Wulstrings bildet, umgeschaltet werden. Durch den schichtweisen Aufbau von aussen nach innen können hochaktivierte Mehrkomponentenreaktionswerkstoffe verarbeitet werden, deren Verfestigungszeit unterhalb der Einfüllzeit in das Formwerkzeug liegt. Der während der Verfestigung auftretende Schrumpf wird zum überwiegenden Teil schon während des Giessvorganges aufgefangen. Durch die Verstärkungseinlagen oder durch Turbulenzen hervorgerufene Blasen im Reaktionsgemisch befinden sich zwangsläufig in der noch niedrigviskosen Phase der Reaktionsmasse und wandern bei hohen Umfangsgeschwindigkeiten der Schleuderform aufgrund der Dichteunterschiede mit dem sich aufbauenden Füllspiegel der flüssigen Reaktionsmasse nach innen.

Die erfindungsgemässe Vorrichtung ist im folgenden beispielhaft dargestellt und das Verfahren weiter beschrieben. Es zeigen:

Fig. 1 eine Schleudervorrichtung mit axial verschiebbarer Misch- und Eingiessvorrichtung;

Fig. 2 eine Kernform mit einem Leitsystem.

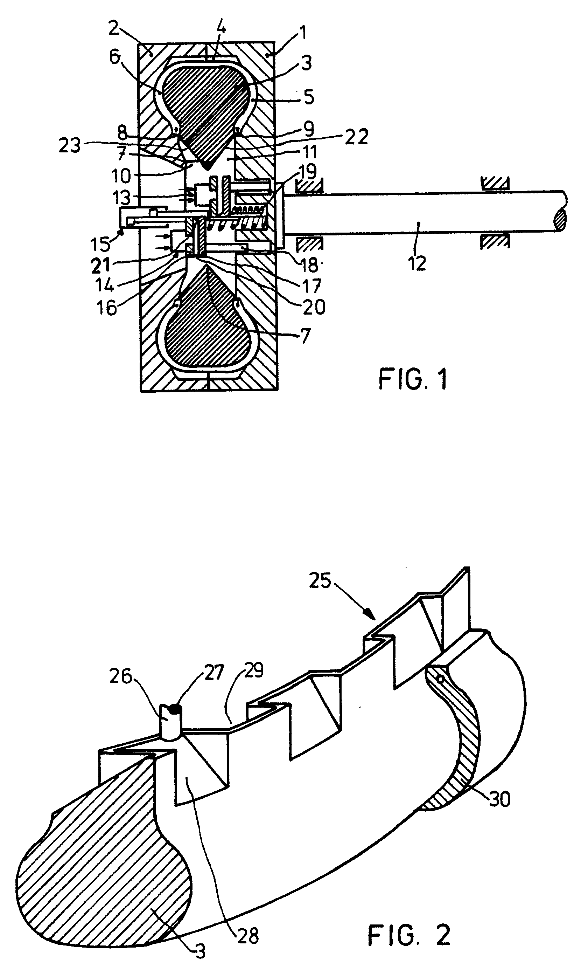

Die Vorrichtung in Fig. 1 besteht aus den beiden, die äussere Form des Reifens bildenden Formwerkzeughälften 1 und 2, der Kernform 3, die mit seiner Aussenkontur die Formhöhlung für die Lauffläche 4, die Karkassenbereiche 5, 6 sowie in seinem Angiessbereich 7 die Angiessöffnungen 8, 9 und die Angiesskanäle 10, 11 begrenzt. Das Formwerkzeug ist mit einer Antriebswelle 12 verbunden. Die Mischvorrichtung besteht aus den beiden selbstreinigend ausgebildeten Injektionsmischköpfen 13, 14, die in einem nichtrotierenden, jedoch mit Hilfe der Kolbenzylindereinheit 15 axial verschiebbaren Leitteller 16 angeordnet sind. Der Leitteller 16 bildet mit dem Leitteller 17 den dynamischen Nachmischer. Der Leitteller 17 ist mit der Formwerkzeughälfte 1 über Führungsbolzen 18 rotationssymmetrisch gelagert und wird durch eine Feder 19 bis zu einem Anschlag axial verschoben. Der Leitteller 17 dreht sich mit der Schleuderform, er ist gegenüber dem nichtrotierenden Leitteller 16 durch den rotationssymmetrischen Vorsprung 21 abgestützt und bildet dadurch den Mischspalt 20. Mit Hilfe der Kolbenzylindereinheit 15 kann die aus den Elementen 13, 14, 16, 17, 18, 19, 21 bestehende Mischvorrichtung während des Schleudergiessvorganges in vorwählbaren exakt gleichen Zeitabständen von der in der oberen Hälfte der Fig. 1 dargestellten Lage (= Angiessen über den Angiesskanal 11 und Angiessöffnung 9) in die unten dargestellte Lage (= Angiessen über Angiesskanal 10 und Angiessöffnung 8) umgesteuert werden. Dabei wird die Reaktionsmischung beim Verlassen des Nachmischers jeweils im Wechsel auf die dem betreffenden Angiesskanal 11 bzw. 10 zugeordnete Angiessfläche 22 bzw. 23 des Angiessbereiches 7 aufgeleitet. Dieser wechselweise oszillierende Umsteuervorgang wird mit der Drehzahl der Schleudergiessvorrichtung synchronisiert, so dass einem Umsteuervorgang jeweils mindestens eine Umdrehung der Schleudergiessvorrichtung zugeordnet wird. Damit ist gewährleistet, dass die aus mindestens einem der Injektionsmischer 13, 14 über den Mischspalt 20 wechselweise in die Angiesskanäle 10, 11 über die zugeordneten Angiessöffnungen 8, 9 in den Formwerkzeughohlraum 4, 5, 6 eintretende Reaktionsmischung nach dem Füllen des Laufflächenbereiches 4 gleichmässig in kleinen Stufen in beiden Karkassen- und Wulstbereichen 5, 6 zudosiert wird. Erfindungswesentlich ist, dass diese Bereiche 5, 6 durch die sich von aussen nach innen aufbauende Reaktionsmischung nahezu symmetrisch gefüllt und gleichzeitig in einfacher vorteilhafter Weise über die Angiessöffnungen 8, 9 entlüftet werden.

Prinzipiell können statt der hier beschriebenen vorteilhaften Mischvorrichtung auch einfache Injektions- und Rührwerksmischer verwendet werden, deren Auslaufrohr mit Giesskanal synchron mit der Drehzahl der Schleudergiessvorrichtung axial verschiebbar angeordnet sind. Sie können jedoch schon aus Platzgründen nicht einander überlappend wirksam werden und in Kombination mit einem die Mischgüte auch jeder einzelnen Reaktionsmischung verbessernden, weitgehend selbstreinigend ausgebildeten dynamischen Nachmischer eingesetzt werden. Der dynamische Nachmischer hat den weiteren Vorteil, dass das Reaktionsgemisch aus dem, durch Zentrifugalbeschleunigung der Reaktionsmasse selbstreinigend ausgebildeten Mischspalt gleichmässig auf den Umfang des Nachmischers verteilt aus diesem austritt. Aufgrund des grösseren Austrittsquerschnitts und damit der geringeren, besser kontrollierbaren Austrittsgeschwindigkeit des Reaktionsgemisches wird diese Art des Angiessens der Verwendung eines Mischkopfes mit Auslaufrohr und meist nicht selbstreinigendem Giesskanal oft vorgezogen.

Bei der in Fig. 2 dargestellten Vorrichtung erfolgt die Aufteilung bzw. Umlenkung des Stromes durch ein am Kern 3 zur Rotationsachse hin angebrachtes Leitsystem 25. Von der während des Formfüllgangs feststehenden Misch- und Giessvorrichtung (nicht gezeichnet) ist nur das Auslaufrohr 26 mit dem Giesskanal 27 dargestellt, der in der Mittelebene liegt. Das Reaktionsgemisch wird symmetrisch auf die beiden Ablaufflächen 28, 29 geleitet, was auch zu einem bezüglich der Mittelebene und der Rotationsachse weitgehend gleichmässigen Reifenaufbau (schematisch angedeutet mit 30) führt.

Anstelle des, der besseren Darstellung wegen gezeichneten Auslaufrohres 26 mit Giesskanal 27 ist selbstverständlich der Einsatz von weitgehend selbstreinigenden Misch- und Giessvorrichtungen mit dynamischem Nachmischer, beispielsweise nach Fig. 1 in vorteilhafter Weise möglich.

## Patentansprüche

1. Verfahren zur Herstellung rotationssymmetrischer und bezüglich einer zur Rotationsachse senkrechten Mittelebene symmetrischer, hohler, zur Rotationsachse hin offener reifenartiger Teile nach dem Reaktionsgiessverfahren aus Polyurethanmehrkomponentenreaktionswerkstoffen, wobei eine Schleuderform und zur Erzeugung des Hohlraumes in dem Teil eine Kernform verwendet werden, und das Reaktionsgemisch von der Rotationsachse her über Angiesskanäle dem Formhohlraum zugeführt wird, dadurch gekennzeichnet, dass das Reaktionsgemisch in gleicher Menge und gleicher Art wechselseitig jeweils nur auf bezüglich der Mittelebene einer Seite dem Formhohlraum derart zugeführt wird, dass bezüglich der Mittelebene und der Rotationsachse ein symmetrischer Aufbau des Teiles erfolgt.

2. Verfahren nach Anspruch 1, dadurch gekennzeichnet, dass die Zusammensetzung des Reaktionsgemisches während des Aufbaues des reifenartigen Teiles mindestens einmal geändert wird.

3. Verfahren nach einem der beiden Ansprüche 1 oder 2, dadurch gekennzeichnet, dass die Mehrkomponentenreaktionsmischung in einem selbstreinigend ausgebildeten Injektionsmischer (13, 14) vorvermischt und in einem den Angiesskanälen (10, 11; 27) vorgeschalteten Nachmischer nachvermischt wird.

4. Verfahren nach einem der Ansprüche 1 bis 3, dadurch gekennzeichnet, dass durch eine axiale Hin- und Herbewegung der in der Rotationsachse liegenden Giessvorrichtung, abgestimmt mit der Rotationsgeschwindigkeit der Form, das Reaktionsgemisch jeweils auf bezüglich der Mittelebene nur einer Seite des Formhohlraums wechselweise zugeführt wird.

5. Verfahren nach einem der Ansprüche 1 bis 3, dadurch gekennzeichnet, dass durch ein Leitsystem an der Kernform bei axial nicht beweglicher Giessvorrichtung das Reaktionsgemisch jeweils bezüglich der Mittelebene nur einer Seite des Formhohlraums zugeführt wird.

6. Vorrichtung zur Durchführung des Verfahrens nach Anspruch 4, bestehend aus einer Schleudergiessform mit einer Kernform (3), wobei der Formhohlraum mit dem herzustellenden reifenförmigen Gebilde (30) übereinstimmt, einem eine Mischvorrichtung beinhaltenden Giesswerkzeug für die Reaktionswerkstoffe, und Angiessvorrichtungen, dadurch gekennzeichnet, dass das Giesswerkzeug in der Reifenachse axial verschiebbar und so ausgebildet ist, dass das Reaktionsgemisch abwechselnd nur jeweils in eine Seite des bezüglich der Mittelebene symmetrischen Formhohlraums gelangen kann, und dass die Bewegung des Giesswerkzeugs sowie die Dauer des Giessens mit der Umdrehungszahl der Form so koordiniert sind, dass ein bezüglich der Mittelebene und auch bezüglich der Rotationsachse weitgehend gleichmässiger Aufbau erfolgt.

7. Vorrichtung zur Durchführung des Verfahrens nach Anspruch 5, bestehend aus einer Schleudergiessform mit einer Kernform (3), wobei der Formhohlraum mit dem herzustellenden reifenförmigen Gebilde (30) übereinstimmt, einem eine Mischvorrichtung beinhaltenden Giesswerkzeug und Angiessvorrichtungen, dadurch gekennzeichnet, dass das Giesswerkzeug orts fest in der Mittelebene des Formwerkzeugs liegt und an der Kernform (3) zur Rotationsachse hin ein Leitsystem (25) angebracht ist, das alternierend nur einen Ablauf des Reaktionsgemisches in jeweils eine Formhälfte zulässt.

8. Vorrichtung nach einem der beiden Ansprüche 6 oder 7, dadurch gekennzeichnet, dass die Mischvorrichtung aus mindestens einem selbstreinigend ausgebildeten, im Bereich der Rotationsachse liegenden Injektionsmischer (13, 14) besteht, in dem die Vorvermischung stattfindet, und dass den Angiesskanälen (10, 11; 27) Nachmischer vorgeschaltet sind.

## Revendications

1. Procédé pour la production de pièces creuses du type pneumatiques, présentant une symétrie de rotation, symétriques par rapport à un plan médian perpendiculaire à l'axe de rotation et ouvertes vers ce dernier, par le procédé de coulée réactive et à partir de matériaux réactionnels à plusieurs composants, conduisant à des polyuréthannes, avec utilisation d'un moule centrifuge et, pour production de la cavité de la pièce, d'un moule à noyau, et introduction du mélange réactionnel dans l'empreinte du moule depuis l'axe de rotation et par des canaux de carotte, ledit procédé étant caractérisé en ce que le mélange réactionnel est alternativement introduit, en quantité égale et de la même façon, d'un seul côté de l'empreinte du moule par rapport au plan médian, afin d'obtenir une structure de la pièce symétrique par rapport au plan médian et à l'axe de rotation.

2. Procédé selon la revendication 1, caractérisé en ce que la composition du mélange réactionnel est modifiée une fois au moins pendant la constitution de la pièce du type pneumatique.

3. Procédé selon l'une des revendications 1 ou 2, caractérisé en ce que le mélange réactionnel à plusieurs composants est prémélangé dans un mélangeur secondaire disposé en amont des canaux de carotte (10, 11; 27).

4. Procédé selon l'une quelconque des revendications 1 à 3, caractérisé en ce que le mélange réactionnel alimente alternativement un seul côté de l'empreinte par rapport au plan médian, par suite d'un mouvement de va-et-vient axial du dispositif de coulée, monté sur l'axe de rotation et adapté à la vitesse de rotation du moule.

5. Procédé selon l'une quelconque des revendications 1 à 3, caractérisé en ce que le mélange réactionnel alimente alternativement un seul côté de l'empreinte par rapport au plan médian, par suite d'un système déflecteur monté sur le moule à noyau, le dispositif de coulée n'étant pas mobile axialement.

6. Dispositif pour la mise en œuvre du procédé selon la revendication 4, constitué par un moule centrifuge avec un moule à noyau (3) et dont l'empreinte coïncide avec la structure (30) du type pneumatique à produire, un dispositif de coulée des mélanges réactionnels contenant un dispositif mélangeur et des dispositifs d'alimentation, ledit dispositif étant caractérisé en ce que le dispositif de coulée est mobile axialement sur l'axe du pneumatique et réalisé de façon que le mélange réactionnel ne puisse atteindre alternativement qu'un seul côté de l'empreinte par rapport au plan médian, et en ce que le mouvement du dispositif de coulée et la durée de coulée sont coordonnés avec la vitesse de rotation du moule de façon à produire une structure pratiquement homogène par rapport au plan médian et à l'axe de rotation.

7. Dispositif pour la mise en œuvre du procédé selon la revendication 5, constitué par un moule centrifuge avec un moule à noyau (3) et dont la cavité coïncide avec la structure (30) du type pneumatique à produire, un dispositif de coulée contenant un dispositif mélangeur et des dispositifs d'alimentation, ledit dispositif étant caractérisé en ce que le dispositif de coulée est fixe dans le plan médian du moule, et en ce que le moule à noyau (3) porte un système déflecteur (25) vers l'axe de rotation, qui permet, alternativement, l'écoulement du mélange réactionnel dans un seul demi-moule.

8. Dispositif selon l'une des revendications 6 ou 7, caractérisé en ce que le dispositif mélangeur est constitué par au moins un mélangeur d'injection (13, 14) autonettoyeur, disposé au voisinage de l'axe de rotation et dans lequel s'effectue le prémélangeage; et des mélangeurs secondaires sont disposés en amont des canaux de carotte (10, 11; 27).

**Claims**

1. A method of producing hollow tyre-like articles which are open toward the rotational axis, are rotationally symmetrical and are symmetrical with respect to a central plane perpendicular to the rotational axis from polyurethane multi-component reaction materials by the reaction casting method, a centrifugal mould and a core mould for generating the cavity in the article being used, and the reaction mixture being supplied from the rotational axis via feed channels to the mould cavity, characterized in that the reaction mixture is supplied alternately in like quantity and in like manner to the mould cavity only with respect to the central plane on one side in such a way that the article is built up symmetrically with respect to the central plane and the rotational axis.

2. A method according to claim 1, characterized in that the composition of the reaction mixture is changed at least once while the tyre-like article is being built up.

3. A method according to claim 1 or 2, characterized in that the multi-component reaction mixture is premixed in an injection mixer (13, 14) which is designed self-cleaning and is subsequently mixed in a subsequent mixer arranged upstream of the feed channels (10, 11; 27).

4. A method according to one of claims 1 to 3, characterized in that the reaction mixture is supplied with respect to the central plane on only one side of the mould cavity alternately at any time through an axial to-and-fro movement of the casting apparatus lying in the rotational axis, determined by the rotational speed of the mould.

5. A method according to one of claims 1 to 3, characterized in that the reaction mixture is supplied with respect to the central plane of only one side of the mould cavity at any time through a guide system on the core mould in the case of a casting apparatus which does not move axially.

6. An apparatus for carrying out the method according to claim 4, consisting of a centrifugal casting mould with a core mould (3), the mould cavity conforming to the tyre-shaped configuration (30) to be produced, a casting tool for the reaction materials containing a mixing apparatus, and feed devices, characterized in that the casting tool is axially movable in the tyre axis and is designed in such a way that the reaction mixture can pass alternately at any time into only one side of the mould cavity which is symmetrical with respect to the central plane and that the movement of the casting tool as well as the duration of casting are coordinated with the rotational speed of the mould in such a way that a structure is achieved which is substantially uniform with respect to the central plane and also with respect to the rotational axis.

7. An apparatus for carrying out the method according to claim 5, consisting of a centrifugal casting mould with a core mould (3), the mould cavity conforming to the tyre-shaped configuration (30) to be formed, a casting tool containing a mixing apparatus and feed apparatuses, characterized in that the casting tool lies stationarily in the central plane of the mould and a guide system (25) which only allows the reaction mixture alternately to flow out at any time into one half of the mould is arranged on the core mould (3) towards the rotational axis.

8. An apparatus according to claim 6 or 7, characterized in that the mixing apparatus consists of at least one injection mixer (13, 14) which is designed self-cleaning and lies in the region of the rotational axis, in which the preliminary mixing takes place and in that subsequent mixers are arranged upstream of the feed channels (10, 11; 27).

FIG. 1

FIG. 2